# EUROPEAN PATENT SPECIFICATION

(11) **EP 3 250 041 B1**
(45) Date of publication and mention of the grant of the patent: **12.06.2019**
(21) Application number: 16702041.1
(22) Date of filing: 19.01.2016
(51) Int. Cl.: A23D 7/005, A23D 7/015, A23G 9/32, A21D 10/00, A21D 2/18, A21D 2/16, A21D 2/14, A23L 33/115, A21D 13/38, A21D 2/36, A21D 2/34, A23G 9/34

(54) **EDIBLE EMULSION SUBSTANTIALLY FREE OF TRANS FATTY ACIDS**
IM WESENTLICHEN VON TRANSFETTSÄUREN FREIE ESSBARE EMULSION
ÉMULSION COMESTIBLE SENSIBLEMENT EXEMPTE D'ACIDES GRAS TRANS

(30) Priority: 29.01.2015 US 201562109423 P
(43) Date of publication of application: 06.12.2017
(73) Proprietor: Venta de Especialidades Químicas S.A., 08228 Terrassa (ES)
(72) Inventor: MIRET CARCELLER, Jordi, 08017 Barcelona (ES); MOLINOS GÓMEZ, Alberto D., 08172 Sant Cugat del Vallès (ES); BELTRÁN PINA, Maria Teresa, 08840 Viladecans (ES)
(74) Representative: ZBM Patents - Zea, Barlocci & Markvardsen
(86) International application number: PCT/EP2016/050979
(87) International publication number: WO 2016/120123

(56) References cited:
- EP-A1- 2 774 494
- WO-A1-2013/064712

## Description

The present invention relates to an edible emulsion substantially free of trans fatty acids which is suitable for substituting animal and vegetable fats in foodstuffs. It also relates to a process for its preparation, and to a foodstuff comprising it, in particular, backed food products, ice creams or cream type fillings.

### BACKGROUND ART

Animal and vegetable fats have been traditionally used in the production of several foods, especially backed foods. Fats play an important role in giving to food products a desirable taste and mouthfeel when eaten, a good physical appearance, and suitable texture/consistency properties, the latter being the result of the fact that the fats are generally solid at room temperature.

It is well known that animal and vegetable fats contain a high percentage of saturated fatty acids and trans fatty acids, which generally tend to increase undesirable Low-density lipoprotein (LDL) cholesterol levels and to lower beneficial High-density lipoprotein (HDL) cholesterol levels, which in turn are linked to a higher risk of developing heart disease, stroke, and type 2 diabetes.

On the other hand, most vegetable oils have a high percentage of unsaturated fatty acids and a low proportion of saturated fatty acids. Additionally, vegetable oils are substantially free of trans fatty acids. Thus, these vegetable oils are healthier than animal fats or vegetable fats.

In view of the above, some food manufacturers have tried to substitute the animal and vegetable fats by such vegetable oils. However, the liquid consistency of the vegetable oils makes them not suitable for industrial application especially in the case of backed foods. Further, the use of hydrogenated vegetable oils, which would give an appropriate texture to the food products, is also not suitable because during the hydrogenation process unhealthy saturated fatty acids and trans fatty acids are formed.

Moreover, other attempts to remove and/or substitute the fats from the food products have unfortunately resulted in products with undesirable or unsuitable organoleptic features that are not acceptable to the consumers.

Document WO 2013/064712 discloses a trans-fatty-acid-free edible emulsion comprising a vegetable oil, a cellulose ether, and water, which can replace the fat content of a food product.

EP2774494 discloses a mayonnaise comprising, with respect to the total weight of the composition, 50 wt% or less of vegetable oil, a cellulose ether, and an excipient. The cellulose ether is preferably hydroxypropylmethyl cellulose and is preferably included in a range of 1 to 3 wt%. The excipient is preferably selected from an isolated soy protein, powdered skim milk, or starch. The mayonnaise composition may further include a stabilizer such as xanthan gum, which is preferably included in a range of 0.05 to 1 wt% The pH of the emulsion is 4,5-5,5. The mayonnaise may further comprise water, vinegar, sugar and salt.

Therefore, there is a need to develop a fat substitute, which is substantially free of trans fatty acids and shows appropriate organoleptic properties, such as taste and texture, and overcomes the problems of the prior art, in particular microbiological and physical stability during storing.

### SUMMARY OF THE INVENTION

The present invention relates to an edible emulsion substantially free of trans fatty acids which is suitable for substituting animal and vegetable fats in food products, in particular backed products.

The inventors have found that the emulsions of the invention further comprising a pH adjusting agent and an anionic naturally occurring polysaccharide of vegetal or microbiological origin show a higher stability, both microbiological and physical stability, during storage, with respect to the emulsions disclosed in WO 2013/064712. The problem of the microbiological contamination of edible emulsions is neither addressed nor disclosed in WO 2013/064712.

Moreover, the emulsion of the invention maintains a suitable healthier fat profile (it is substantially free of trans fatty acids and has a significant lower content of saturated fatty acids) and good organoleptic features, which make it suitable for substituting animal and vegetable fats present in traditional foods.

Therefore, an aspect of the present invention relates to an edible emulsion consisting of:
a) from 1.2 to 3.0 wt% of one or more thermogelling cellulose ethers,
b) from 40 to 50 wt% of one or more vegetable oils,
c) a pH adjusting agent in an amount such that the pH of the final emulsion is from 3.5 to 6.0,
d) from 0.02 to 0.5 wt% of an anionic naturally occurring polysaccharide of vegetal or microbiological origin, selected from the group consisting of xanthan gum, gellan gum, bamboo fiber, citric fiber, green pea fiber, oat fiber, wheat fiber, and potato fiber,
e) from 45 to 60 wt% of water f) one or more additives selected from the group consisting of preservatives, antioxidants, colouring agent, aromas, and combinations thereof;
wherein the amount of trans fatty acids in the emulsion is lower than 0.1 wt%; and
wherein the percentages are expressed with respect to the total weight of the emulsion provided that the sum of the amounts of the components is equal to or less than 100%.

A second aspect of the invention relates to a process for the preparation of the edible emulsion as defined above, which comprises:
a) dispersing one or more cellulose ethers and optionally one or more additives in one or more vegetable oils to obtain an oily phase,
b) separately dissolving an anionic naturally occurring polysaccharide of vegetal or microbiological origin and one or more additives in water at a temperature from 20 to 80 °C to obtain an aqueous phase, wherein the additives are added either to the oily phase a) or to the aqueous phase b) depending on their solubility,
c) cooling the aqueous phase obtained in step b) to room temperature,
d) adding a pH adjusting agent to the solution of step c),
e) cooling the aqueous phase obtained in step d) to a temperature from 1 to 15 °C, and
f) adding the aqueous phase of step e) to the oily phase of step a) to obtain an emulsion.

The edible emulsion of the invention may be used for preparing foodstuffs. Thus, another aspect of the invention relates to a foodstuff comprising the edible emulsion as defined above and optionally further edible components.

### DETAILED DESCRIPTION OF THE INVENTION

As mentioned above the invention relates to an edible emulsion comprising thermogelling cellulose ethers, vegetable oils, a pH adjusting agent, an anionic naturally occurring polysaccharide of vegetal or microbiological origin and water.

For the purposes of the present invention, the term "emulsion" relates to a mixture of two or more liquids that are immiscible, in which one liquid (the dispersed phase) is dispersed in the other (the continuous phase).

The term "edible," as used herein, means non-toxic and suitable for consumption.

The edible emulsion of the invention is "substantially free of trans fatty acids". This means that the emulsion contains less than 0.1 wt%; with respect to the total weight of the emulsion. The content of trans fatty acids can be easily determined by the skilled in the art using well-known techniques, such as gas chromatography.

The term "fatty acid" as used herein refers to an organic compound having a (C₄-C₂₈)hydrocarbon chain possessing a terminal carboxylic acid group (i.e., -COOH), which is either saturated or unsaturated. Saturated fatty acids are composed of only C-C single bonds, whereas unsaturated fatty acids have one or more C-C double bonds. The expression "trans fatty acid" refers to unsaturated fatty acids in which the two hydrogen atoms of a double bond are in trans configuration, i.e. one on each side of the double bond.

The edible emulsion of the invention comprises one or more thermogelling cellulose ethers. Cellulose ethers are water-soluble polymers obtained by chemical modification of cellulose. This chemical modification involves replacing some or all of the hydroxyl groups found in each glucose residue of the cellulose chain. For example, replacement of the H of the hydroxy groups of the cellulose by methyl groups produces methylcellulose (MC). Replacement of further H of hydroxy groups by hydroxypropyl groups produces hydroxypropylmethylcellulose (HPMC) having a mixture of methoxy and hydroxypropoxy substitution. The amount of substituent groups replacing hydroxy groups determines the degree of substitution, which can be designated as percentage. Thus, for example, the percentage of methoxy substitution refers to the number of methoxy groups existing in a MC or HPMC with respect to the total number of hydroxy, methoxy and hydroxypropoxy groups in the MC or HPMC; and the percentage of hydroxypropoxy substitution refers to the number of hydroxypropoxy groups existing in a HPMC with respect to the total number of hydroxyl, methoxy and hydroxypropoxy groups in the HPMC.

In a particular embodiment, optionally in combination with one or more features of the various embodiments described above or below, the % of methoxy groups in MC is from 25 to 33 % as defined above, and the % of methoxy groups and of hydroxypropoxy groups in HPMC is from 19 to 30 %, and from 3 to 12%, respectively, as defined above.

The cellulose ethers of the emulsion are thermogelling polymers, i.e. they exhibit reverse thermogellation in water. Reverse thermogellation refers herein to the ability of the cellulose ether to undergo a sol-to-gel transition and form a gel at a temperature higher than room temperature, preferably at a temperature from 45 to 95°C. In a particular embodiment, optionally in combination with one or more features of the various embodiments described above or below, MC exhibits a sol-to-gel transition at a temperature from 50 to 55 °C, and HPMC (F-type) exhibits a sol-to-gel transition at a temperature from 60 to 68 °C. This thermogelling property allows stabilizing the emulsion during heating and imparts a texture similar to that provided by the fat.

For the purposes of the invention, room temperature refers to 20-25 °C.

In one particular embodiment, optionally in combination with one or more features of the various embodiments described above or below, the thermogelling cellulose ethers of the emulsion of the invention are selected from the group consisting of hydroxypropylmethylcellulose (HPMC), methylcellulose (MC), and combinations thereof.

In another particular embodiment, optionally in combination with one or more features of the various embodiments described above or below, the emulsion of the invention comprises one thermogelling cellulose ether selected from the group consisting of hydroxypropylmethylcellulose (HPMC), methylcellulose (MC), and combinations thereof. More particularly, the cellulose ether is MC.

In another particular embodiment, optionally in combination with one or more features of the various embodiments described above or below, the percentage of methoxy substitution of the cellulose ethers of the emulsion is from 19% to 40%, and the percentage of hydroxypropoxy substitution is from 0% to 12, wherein the percentages are as defined above.

In another particular embodiment, optionally in combination with one or more features of the various embodiments described above or below, the molecular weight of the cellulose ethers is from 10.000 to 400000 Da. In a particular embodiment, optionally in combination with one or more features of the various embodiments described above or below, the molecular weight of MC is from 20.000 to 380.000 Da, and the molecular weight of HPMC is from 13.000 to 200.000 Da.

In another particular embodiment, optionally in combination with one or more features of the various embodiments described above or below, the edible emulsion of the invention comprises one or more thermogelling cellulose ethers in an amount from 1.5 to 2.0 wt% with respect to the total weight of the emulsion.

The edible emulsion of the invention contains one or more vegetable oils obtained from fruits and seeds. Depending on the type of vegetable oils used, the content of saturated and unsaturated fatty acids may be controlled and modified.

In one particular embodiment, optionally in combination with one or more features of the various embodiments described above or below, the vegetable oils are non-hydrogenated vegetable oils. The term "non-hydrogenated" oils refers to vegetable oils that have not been subjected to any physical or chemical hydrogenation process that causes changes in, or is designed to alter, the naturally occurring fatty acid composition of the oil. Therefore, the vegetable oils are substantially free of trans fatty acids.

In one particular embodiment, optionally in combination with one or more features of the various embodiments described above or below, the vegetable oils are selected from the group consisting of olive oil, sunflower oil, corn oil, soybean oil, rapeseed oil, linseed oil, peanut oil, and a combination thereof. More particularly, the vegetable oil is sunflower oil.

In another particular embodiment, optionally in combination with one or more features of the various embodiments described above or below, the edible emulsion as defined above comprises one vegetable oil selected from the group consisting of olive oil, sunflower oil, corn oil, soybean oil, rapeseed oil, linseed oil, peanut oil, and a combination thereof. More particularly, the vegetable oil is sunflower oil.

The emulsion of the invention presents a semisolid consistency which makes it suitable for the completely replacement of animal and vegetable fats in food products, while retaining the organoleptic properties of the original product such as desirable taste and mouth feel, and appropriate texture. For the purposes of the invention, the fact that the emulsion has "semisolid" consistency means that it has the consistency between a solid and a liquid at room temperature. More particularly, the emulsion of the invention has a viscosity from 50000 to 150000 mPa.s, more preferably from 90000 to 130000 mPa.s (as measured with a Brookfield, Helipath S94, 10 rpm, 20 °C).

In another particular embodiment, optionally in combination with one or more features of the various embodiments described above or below, the edible emulsion of the invention comprises one or more vegetable oils in an amount from 45 to 48 wt% with respect to the total weight of the emulsion.

The emulsion of the invention further comprises an anionic naturally occurring polysaccharide of vegetal or microbiological origin which is appropriate for edible purposes.

In one particular embodiment, optionally in combination with one or more features of the various embodiments described above or below, the anionic naturally occurring polysaccharide of vegetal or microbiological origin is selected from an anionic natural vegetal fiber and an anionic hydrocolloid gum.

As used herein, the term "anionic natural vegetal fiber" or dietary fiber refers to polysaccharides which are resistant to the endogenous enzymes of man and are composed mainly of cellulose, hemicellulose and others. Non-limiting examples of natural vegetal fibers include bamboo fibers, citric fibers, green pea fibers, oat fibers, wheat fibers, potato fibers and the like.

An advantage of using anionic natural vegetal fibers is that they are available from natural sources and require minimal processing. Additionally, they give to the emulsion a more margarine-like spread behavior, which is appreciated by the foodstuff producer, and an improved mouthfeel.

In one particular embodiment, optionally in combination with one or more features of the various embodiments described above or below, the anionic naturally occurring polysaccharide of vegetal or microbiological origin is an anionic natural vegetal fiber, more particularly is bamboo fiber.

As used herein, the term "anionic hydrocolloid gum" refers to a a naturally occurring polysaccharide of plant origin which is anionic and can form a gel or gel-like composition with water. Non-limiting examples of anionic hydrocolloid gums are e.g. gellan gum (E418) and xanthan gum.

In one particular embodiment, optionally in combination with one or more features of the various embodiments described above or below, the anionic naturally occurring polysaccharide of vegetal or microbiological origin is an anionic hydrocolloid gum is selected from the group consisting of xanthan gum and gellan gum; more particularly, is xanthan gum.

The naturally occurring polysaccharide of vegetal or microbiological origin is selected from bambo fiber, citric fiber, green pea fiber, oat fiber, wheat fiber, potato fiber, gellan gum, and xanthan gum, more particularly is bambo fiber or xanthan gum.

In one particular embodiment, optionally in combination with one or more features of the various embodiments described above or below, the emulsion of the invention comprises an anionic naturally occurring polysaccharide of vegetal or microbiological origin, more particularly an anionic natural vegetal fiber or an hydrocolloid gum as defined above, in an amount from 0.02 to 0.3 wt%, more particulalrly from 0.03 to 0.2 wt%, even more particularly from 0.05 to 0.10 wt% with respect to the total weight of the emulsion.

In one particular embodiment, optionally in combination with one or more features of the various embodiments described above or below, the emulsion of the invention comprises an anionic hydrocolloid gum as defined above, in an amount from 0.02 to 0.3 wt%, more particulalrly from 0.03 to 0.2 wt%, even more particularly from 0.05 to 0.10 wt% with respect to the total weight of the emulsion.

The emulsion of the invention comprises a pH adjusting agent which must be suitable for edible purposes and which allows that the final pH of the emulsion is from 3.5 to 6.0, more preferably from 3.8 to 5.0, and even more preferably from 3.5 to 4.5.

In one particular embodiment, optionally in combination with one or more features of the various embodiments described above or below, the pH adjusting agent is an edible organic acid which is able to provide the above defined pH value. Non limiting examples of suitable pH adjusting agents include citric acid, lactic acid, acetic acid, tartaric acid, malic acid or phosphoric acid. In a more particular embodiment, the pH adjusting agent is citric acid. More particularly, citric acid is present in an amount from 0.9 to 0.11 wt% with respect to the total weight of the emulsion.

The composition of the invention also comprises water in an amount from 45 to 60 wt%, more particularly from 48 to 55 wt%.

The edible emulsion of the invention may further comprise one or more preservatives, which are suitable for use in food products. Preservatives may further prevent the growth of microorganisms. Non-limiting examples of preservatives include, e.g. sodium or potassium chlorides, phosphates, nitrates and nitrites; sulfur dioxide and sulfites; sorbic acid, calcium sorbate, sodium sorbate, potassium sorbate, and the like. In another particular embodiment, optionally in combination with one or more features of the various embodiments described above or below, the emulsion of the invention comprises one or more preservatives in an amount from 0.1 to 2.0 wt% with respect to the total weight of the emulsion.

In another particular embodiment, optionally in combination with one or more features of the various embodiments described above or below, the preservatives are selected from the group consisting of sorbic acid, calcium sorbate, sodium sorbate, potassium sorbate, and a combination thereof. More particularly, the preservatives are sorbic acid and a sorbate selected from calcium sorbate, potassium sorbate and sodium sorbate, even more particularly, sorbic acid, and potassium sorbate, in particular, they are present in the edible emulsion in an amount from 0.01 to 0.3 wt%.

Additionally, the emulsion of the invention may contain further additives like antioxidants, colouring agents, and aromas. Thus, in another particular embodiment, optionally in combination with one or more features of the various embodiments described above or below, the edible emulsion of the invention further comprises one or more additives selected from the group consisting of antioxidants, emulsifiers, colouring agents, aromas, and combinations thereof.

Non-limiting examples of antioxidants include, e.g., ascorbic acid (vitamin C), tocopherol (vitamin E), butylated hydroxyanisole (BHA), propyl gallate, and butylated hydroxytoluene (BHT). Generally, the additives of the emulsion are present in an amount from 0.01 to 2.0 wt% with respect to the total weight of the emulsion.

As mentioned above, the edible emulsion of the invention is physically and microbiologically stable, contrary to the emulsions of the prior art. This is shown in the examples below.

The term "physical stable" means that the emulsion of the invention shows low syneresis or, more particularly is resistant to syneresis during storage, in particular during storage at room temperature for a period of time of at least 3, preferably 4 months. The term "syneresis" as used herein refers to the phenomenon in which serum (water plus dissolved components) is released from the gel network. The development of this phenomenon during storage is highly undesirable because it is detrimental to the visual characteristics normally associated with the product. Moroever, this pehenomen may facilitate microbiological growth.

The term "microbiologically stable" means that the emulsion of the invention has acceptable contamination values by microorganisms such as some bacteria, molds and yeasts during storage at room temperature for a period of time of at least 3, preferably 4 months. Generally, it is considered that an emulsion has acceptable microbiological contamination when the log (CFU/g) for bacteria is lower than 4, preferably lower than 3; and the log (CFU/g) for molds and yeasts is lower than 2.

As previously mentioned, the invention also refers to a process for the preparation of the edible emulsion as defined above, which comprises the following steps:
a) dispersing the one or more cellulose ethers in the one or more vegetable oils to obtain an oily phase,
b) separately dissolving the anionic naturally occurring polysaccharide of vegetal or microbiological origin in water at a temperature from 20 to 80 °C to obtain an aqueous phase,
c) cooling the aqueous phase obtained in step b) to room temperature,
d) adding the pH adjusting agent to the solution of step c),
e) cooling the aqueous phase obtained in step d) to a temperature from 1 to 15 °C, and
f) adding the aqueous phase of step e) to the oily phase of step a) to obtain an emulsion.

Generally, the dispersion of the cellulose ethers in the vegetable oils in step a) and the dissolution of the anionic naturally occurring polysaccharide of vegetal or microbiological origin, more particulalry the anionic natural vegetal fiber or the anionic hydrocolloid gum, in water in step b) are generally carried out under stirring until obtaining a homogeneous oily phase and a homogeneous aqueous phase, respectively.

In another particular embodiment, optionally in combination with one or more features of the various embodiments described above or below, the anionic natural vegetal fiber is bamboo fiber and step b) is carried out at a temperature from 20 to 35 °C, more particularly from 25 to 30 °C.

In another particular embodiment, optionally in combination with one or more features of the various embodiments described above or below, the anionic hydrocolloid gum is xanthan gum and step b) is carried out at a temperature from 20 to 35 °C.

In another particular embodiment, optionally in combination with one or more features of the various embodiments described above or below, the anionic hydrocolloid gum is gellan gum and step b) is carried out at a temperature from 70 to 85 °C.

In another particular embodiment, optionally in combination with one or more features of the various embodiments described above or below, the cellulose ethers comprise methylcellulose and step e) comprises cooling the aqueous phase obtained in step d) to a temperature from 1 to 10 °C. In another particular embodiment, optionally in combination with one or more features of the various embodiments described above or below, the cellulose ethers comprise hydroxypropylmethylcellulose and step e) comprises cooling the aqueous phase obtained in step d) to a temperature from 4 to 15 °C.

When the emulsion comprises further additives, these are added to the aqueous or oily phase, depending on their solubility. For example antioxidants, and colouring agents are generally added to the oily phase and preservatives may be added in both phases depending on their nature.

Optionally, in the above process, all ingredients may be sterilized and pasteurized before being mixed.

As mentioned above, it also forms part of the invention a foodstuff comprising the edible emulsion as defined above and optionally further edible components.

For the purposes of the invention, the terms "foodstuff" or "food product" refer to products for direct consumption which are taken by the mouth, and the constituents of which are absorbed by the gastrointestinal tract.

As foodstuffs, the edible emulsions of the invention can be directly eaten alone or in combination with further edible components. Alternatively, the edible emulsions of the invention can be combined with further edible components (e.g. milk, eggs, sugar, flour, butter, etc.), to give rise to a food dough, which is an intermediate product for making the final end food product. In some cases, the food dough may require further processing (e.g. by a baking process, water bath, infrared system or frying process) to the final end product before consumption.

In a particular embodiment, optionally in combination with one or more features of the various embodiments described above or below, the foodstuff comprises the emulsion of the invention in an amount from 5% to 50 wt%, with respect to the total weight of the foodstuff.

In another particular embodiment, optionally in combination with one or more features of the various embodiments described above or below, the foodstuff comprising the emulsion of the invention is an ice cream, a cream type filling, or a baked foodstuff, more particularly, pastry foodstuff or confectionary foodstuff. Non-limiting examples of backed foods are, e.g., cakes, sponge cakes, muffins, buns, pancakes, waffles, croissants, biscuits, or cookies.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples are provided by way of illustration, and they are not intended to be limiting of the present invention. Furthermore, the present invention covers all possible combinations of particular and preferred embodiments described herein.

### EXAMPLES

### Protocol 1

### a) Preparation of the oily phase

Carotene (E160ai), tocopherol extract (E306) and sorbic acid (E200, if present in the final emulsion) were dissolved in the sunflower oil under stirring. Then, methylcellulose (E461) was dispersed in the oil by using a Heidolph stirrer equipped with a rounded three-blade stir bar at the lowest speed (ca. 30-100 rpm) for 5 minutes until obtaining a homogeneous phase.

### b) Preparation of the aqueous phase

Citric acid (E330) and/or potassium sorbate (E202, if any of them present in the final emulsion) were dissolved in water. The resulting aqueous phase or water (if no other components were present) was cooled to 1-10°C, more particularly to 8-10 °C.

### c) Preparation of the emulsion

The aqueous phase was added to the oily phase at 8-10 °C (under stirring by following one of the conditions below:
a) using an Ultraturrax stirrer (IKA 18 Basic Kit, S18N-19G Dispersing Tool): the mixture was first stirred at 6000 rpm for 15 seconds and then at 24000 rpm for 30 s.
b) using an Ultraturrax stirrer (IKA 25 Basic Kit, S25N-25F Dispersing Tool): the mixture was stirred first at 11000 rpm for 45 seconds, then at 19000 rpm for 60 s, then at 24000 for 60 s, and then at 16000 rpm for 60 s.
c) using a Silverson stirrer (High Shear Mixer L5M with emulsor screen medium perforation): the mixture was first stirred at 4000 rpm for 60 seconds, then at 6000 rpm for 60 s, and then at 8000 rpm for 90 s.

### Protocol 2

### a) Preparation of the oily phase

Carotene (E160ai), tocopherol extract (E306) and sorbic acid (E200) were dissolved in the sunflower oil under stirring. Soy lecithin (E322) (if present in the final emulsion) was then added. Later on, methylcellulose (E461) was dispersed in the oil by using a Heidolph stirrer equipped with a rounded three-blade stir bar at the lowest speed (ca. 30-100 rpm) for 5 minutes until obtaining a homogeneous phase. After that, aroma was added to the oily phase.

### b) Preparation of the aqueous phase

- If the final emulsion contained xanthan gum, Propylene Glycol Alginate (E-405) or Hydroxypropyl distarch phosphate (E-1442):
   Xanthan gum, Propylene Glycol Alginate or Hydroxypropyl distarch phosphate were added to water under vigorous stirring at 25-30 °C; or alternatively
- If the final emulsion contained gellan gum:
   Gellan gum was added to water at 75-80 °C and was stirred for 10 min. Then, it was allowed to cool to room temperature.
- In all cases:
   Citric acid and potassium sorbate were added to the aqueous phase and the aqueous phase was cooled to 8-10 °C.

### c) Preparation of the emulsion

The aqueous phase was added to the oily phase at 10 °C under stirring by using a Silverson stirrer (High Shear Mixer L5M with emulsor screen medium perforation): the mixture was first stirred at 4000 rpm for 60 seconds, then at 6000 rpm for 60 s, and then at 8000 rpm for 90 s.

### Protocol 3

### a) Preparation of the oily phase

Tocopherol extract (E306) and sorbic acid (E200) were dissolved in the sunflower oil under stirring. Methylcellulose (E461) was dispersed in the oil by using a Heidolph stirrer equipped with a rounded three-blade stir bar at the lowest speed (ca. 30-100 rpm) for 5 minutes until obtaining a homogeneous phase.

### b) Preparation of the aqueous phase

Bamboo fiber was added to water under vigorous stirring at 25-30 °C. Then, citric acid and potassium sorbate were added to the aqueous phase and the aqueous phase was cooled to 8-10 °C.

### c) Preparation of the emulsion

The aqueous phase was added to the oily phase at 10 °C under stirring by using a Silverson stirrer (High Shear Mixer L5M with emulsor screen medium perforation): the mixture was first stirred at 4000 rpm for 60 seconds, then at 6000 rpm for 60 s, and then at 8000 rpm for 90 s.

### Examples 1-6

Examples 1-6 were prepared according to protocol 2, as defined above. These emulsions have the composition as shown in the table below:

| **Component** | **Example 1** | **Example 2** | **Example 3** | **Example 4** | **Example 5** | **Example 6** |
|---|---|---|---|---|---|---|
| | **Amount (%wt)** | | | | | |
| Methylcellulose (Methocel A4M) | 2.000 | 1.500 | 1.500 | 2.000 | 1.500 | 1.500 |
| High oleic sunflower oil | 46.830 | 47.283 | 47.283 | 46.783 | 47.283 | 47.283 |
| Citric acid | 0.105 | 0.105 | 0.105 | 0.105 | 0.105 | 0.105 |
| Potassium sorbate | 0.090 | 0.090 | 0.090 | 0.090 | 0.090 | 0.090 |
| Sorbic acid (preservative) | 0.090 | 0.090 | 0.090 | 0.090 | 0.090 | 0.090 |
| β-carotene (Natracol beta carotene, 1% solution) | 0.050 | 0.050 | 0.050 | 0.050 | 0.050 | 0.050 |
| Tocopherol extract (Tocobiol® SF) | 0.020 | 0.020 | 0.020 | 0.020 | 0.020 | 0.020 |
| Butter aroma | 0.010 | 0.008 | 0.008 | 0.008 | 0.008 | 0.008 |
| Xanthan gum | 0.100 | 0.050 | 0.100 | 0.050 | 0.050 | 0.100 |
| Deionized water | 50.705 | 50.805 | 50.755 | 50.805 | 50.805 | 50.755 |
| **Total (wt%)** | 100.000 | 100.000 | 100.000 | 100.000 | 100.000 | 100.000 |
| **pH (20-21°C)** | 4.1 | 4.0 | 4.0 | 3.8 | 4.0 | 4.0 |
| **Viscosity*** | 101000 | 51200 | 59200 | 127700 | 50800 | 67200 |

| | | | | | | |
|---|---|---|---|---|---|---|
| ** The viscosity was measured under the following conditions: Brookfield, Helipath S94, 10 rpm, 20 °C* | | | | | | |

### Examples 7-12

Examples 7-12 were prepared according to protocol 3, as defined above. These emulsions have the composition as shown in the table below:

| **Component** | **Example 7** | **Example 8** | **Example 9** | **Example 10** | **Example 11** | **Example 12** |
|---|---|---|---|---|---|---|
| | **Amount (%wt)** | | | | | |
| Methylcellulose (Methocel A4M) | 1.000 | 1.000 | 1.000 | 2.000 | 2.000 | 2.000 |
| High oleic sunflower oil | 47.783 | 47.783 | 47.783 | 46.783 | 46.783 | 46.783 |
| Citric acid | 0.105 | 0.105 | 0.105 | 0.105 | 0.105 | 0.105 |
| Potassium sorbate | 0.090 | 0.090 | 0.090 | 0.090 | 0.090 | 0.090 |
| Sorbic acid (preservative) | 0.090 | 0.090 | 0.090 | 0.090 | 0.090 | 0.090 |
| Tocopherol extract (Tocobiol® SF) | 0.020 | 0.020 | 0.020 | 0.020 | 0.020 | 0.020 |
| Bamboo Fiber (Vitacel® BAF40) | 0.050 | 0.100 | 0.500 | 0.050 | 0.100 | 0.500 |
| Deionized water | 50.863 | 50.813 | 50.413 | 50.863 | 50.813 | 50.413 |
| **Total (wt%)** | 100.000 | 100.000 | 100.000 | 100.000 | 100.000 | 100.000 |
| **pH (20-21°C)** | 3.9 | 4.0 | 3.9 | 4.0 | 4.0 | 4.0 |
| **Viscosity*** | 18000 | 18200 | 19400 | 110000 | 111000 | 114000 |

| | | | | | | |
|---|---|---|---|---|---|---|
| ** The viscosity was measured under the following conditions: Brookfield, Helipath S94, 10 rpm, 20 °C* | | | | | | |

### Comparative example 1

A comparative emulsion as described in WO 2013/064712 was prepared according to Protocol 1a) as defined above. The composition of the comparative emulsion is the one showed in the table below:

| **Component** | **Amount (%wt)** |
|---|---|
| Methylcellulose (Methocel A4M) | 2.000 |
| High oleic sunflower oil | 46.880 |
| Potassium sorbate | 0.180 |
| β-carotene (Natracol beta carotene, 1% solution) | 0.100 |
| Tocopherol extract (Tocobiol® SF) | 0.020 |
| Deionized water | 50.820 |
| **Total (wt%)** | 100.000 |
| **pH (20-21°C)** | 7.6 |

### Comparative examples 2-7

Comparative examples 2-7, which comprise thickener agents other than anionic naturally occurring polysaccharides of vegetal or microbiological origin, were prepared according to protocol 2, as defined above. These emulsions have the composition as shown in the table below:

| **Component** | **Comparative example 2** | **Comparative example 3** | **Comparative example 4** |
|---|---|---|---|
| | **Amount (%wt)** | | |
| Methylcellulose (Methocel A4M) | 1.500 | 1.500 | 1.500 |
| High oleic sunflower oil | 47.283 | 47.283 | 47.283 |
| Citric acid | 0.105 | 0.105 | 0.105 |
| Potassium sorbate | 0.090 | 0.090 | 0.090 |
| Sorbic acid | 0.090 | 0.090 | 0.090 |
| β-carotene (Natracol beta carotene, 1% solution) | 0.050 | 0.050 | 0.050 |
| Tocopherol extract (Tocobiol® SF) | 0.020 | 0.020 | 0.020 |
| Butter aroma | 0.008 | 0.008 | 0.008 |
| Propylene Glycol Alginate | 0.050 | 0.100 | --- |
| Hydroxypropyl distarch phosphate | --- | --- | 0.050 |
| Deionized water | 50.805 | 50.755 | 50.805 |
| **Total (wt%)** | 100.000 | 100.000 | 100.000 |
| **pH (20-21°C)** | 3.9 | 3.9 | 4.0 |
| **Viscosity** | 45400 | 28200 | 60600 |

| | | | |
|---|---|---|---|
| ** The viscosity was measured under the following conditions: Brookfield, Helipath S94, 10 rpm, 20 °C* | | | |

| **Component** | **Comparative example 5** | **Comparative example 6** | **Comparative example 7** |
|---|---|---|---|
| | **Amount (%wt)** | | |
| Methylcellulose (Methocel A4M) | 1.500 | 1.500 | 2.000 |
| High oleic sunflower oil | 47.283 | 47.283 | 45.830 |
| Citric acid | 0.105 | 0.105 | 0.105 |
| Potassium sorbate | 0.090 | 0.090 | 0.090 |
| Sorbic acid | 0.090 | 0.090 | 0.090 |
| β-carotene (Natracol beta carotene, 1% solution) | 0.050 | 0.050 | 0.050 |
| Tocopherol extract (Tocobiol® SF) | 0.020 | 0.020 | 0.020 |
| Butter aroma | 0.008 | 0.008 | 0.010 |
| Hydroxypropyl distarch phosphate | 0.100 | 1.000 | --- |
| Soy lecithin | --- | --- | 1.000 |
| Deionized water | 50.755 | 49.855 | 50.805 |
| **Total (wt%)** | 100.000 | 100.000 | 100.000 |
| **pH (20-21°C)** | 4.0 | 3.9 | 4.3 |
| **Viscosity** | 62100 | 100000 | 308000 |

| | | | |
|---|---|---|---|
| ** The viscosity was measured under the following conditions: Brookfield, Helipath S94, 10 rpm, 20 °C* | | | |

### Microbiological stability tests

### a) Microbiological stability after storage

The microbiological stability of the emulsion of comparative example 1 was analysed after storage for 4 months at different temperatures (4 °C, 15°C and room temperature).

A sample of 25 g of the product was mixed with 225 g of peptone water into a sterile Stomacher bag (first dilution). Then the sample was stomached during 30 seconds. If necessary, further dilutions with peptone water were carried out. The dilution was spread on the surface of a suitable agar culture and incubated at the appropriate temperature and time:

| **Microorganism** | **Culture media** | **Incubation conditions** |
|---|---|---|
| Mesophilic aerobic bacteria | Trypone Soy Agar (TSA) | 35 °C ± 2 °C, 48 hours |
| Molds & Yeasts | Rose Bengal Chloramphenicol Agar | 25 °C ± 2 °C, 5 days |
| Enterobacteria | VRBG agar | 35 °C ± 2 °C, 48 hours |

The obtained results are summarized in the following table:

| | **log (CFU/g)** | | |
|---|---|---|---|
| | 4 °C | 15 °C | Room temperature |
| Mesophilic aerobic bacteria | 5.6 | 4.2 | 6.8 |
| Enterobacteria | 2.8 | 4.6 | 6.0 |

As can be seen, all samples exhibited a high degree of contamination by aerobic microorganisms regardless of the storage temperature; and the samples at 15 °C and room temperature also exhibited an inappropriate degree of contamination by enterobacteria.

### b) Microbiological challenge test

The microbiological stability of the emulsions of example 4 of the invention was assessed by inoculating them in quadruplicate with a cocktail of microorganisms (1%), so that the concentration of bacteria (*Staphylococcus aureus*, *Escherichia coli*, and *Pseudomonas aeruginosa*) in the sample was 6 log CFU/g and the one of yeast (*Candida albicans*) and molds (*Aspergillus niger*) was 4 log CFU/g. After innoculation, samples were kept at room temperature for 4 days and then the microbiological content was analysed.

The obtained results are summarized in the following table:

| | **Example 4** | | | | |
|---|---|---|---|---|---|
| | **Sample** | **S1** | **S2** | **S3** | **S4** |
| | | **log (CFU/g)** | | | |
| Mesophilic aerobic bacteria | Initial inoculum load | 6.6 | 6.6 | 6.6 | 6.6 |
| | Microbiol. count day 4th | 2.5 | 2.8 | <2.0 | <2.0 |
| Yeasts | Initial inoculum load | 4.3 | 4.3 | 4.3 | 4.3 |
| | Microbiol. count day 4th | <2.0 | <2.0 | <2.0 | <2.0 |
| Molds | Initial inoculum load | 4.6 | 4.6 | 4.6 | 4.6 |
| | Microbiol. count day 4th | 2.6 | 2.6 | <2.0 | <2.0 |

As can be seen, all samples of the example 4 of the invention exhibited a significant reduction of bacteria, molds and yeasts.

### Physical stability tests

### Absorbent paper test

For carrying out this test, two absorbent papers were joined. On the one on the top two concentric circles were drawn, the outer circle having a diameter of approximately 9 cm, and the inner circle having a diameter of approximately 6 cm. Within the inner circle the test emulsion (5 mL) was applied.

Several parameters were evaluated as assessed as follows:
(1) - The emulsion did not extend beyond the inner circle and maintained consistency. A moisture/oil halo was not observed. With respect to the below absorbent paper:
   (1A): no moisture was appreciated
   (1B): moisture was seen
   (1C): moisture was qualitatively superior
(2) - The emulsion did not extend beyond the inner circle and maintained consistency. A moisture/oil halo was observed.
(3) - The emulsion extended beyond the inner circle and maintains consistency.

### Stability to sonication

The test emulsion (30 mL) was introduced into a closed container and was sonicated for 45 min.
Several parameters were evaluated and assessed as follows:
(1) The emulsion remained homogeneous
(2) The emulsion showed limited or moderate droplets /stains
(3) The emulsion showed plenty of has droplets / stains

### Stability to thermal cycles

In this assay the test emulsions were subjected to repeating temperature cycles as follows: the test emulsion was heated from 4 °C to 40 °C for 0.5h; it was maintained at 40°C for 2.5h; then it was cooled to 4°C for 0.5h; and finally maintained at 4°C for 0.5h. These conditions were repeated 4 times.

The appearance of the emulsion after the thermal cycle treatment was evaluated after 3 days, 1 week and 3 weeks and assessed as follows:
(1) The emulsion remained homogeneous.
(2) The emulsion remained homogeneous but liquid was observed on the vessel lid.
   (2A): the amount of liquid on the vessel lid was scarce.
   (2B): the amount of liquid on the top was significant.
(3) The emulsion remained homogeneous but liquid was observed on the vessel lid and on the surface of the emulsion.
(4) The emulsion remained homogeneous but a larger amount of liquid was observed on the surface of the emulsion (usually accompanied by the presence of "liquid" on the vessel lid)
(5) The emulsion broke (cracks appeared on the surface and/or oil droplets)

The following results were obtained:

| **Stability tests** | | **Example 1** | **Example 2** | **Example 3** | **Example 4** | **Example 5** | **Example 6** |
|---|---|---|---|---|---|---|---|
| Absorbent paper test | | 1B | 1B | 1C | 1B | 1B | 1B |
| Sonication | | 2 | 1 | 2 | 1 | 1 | 2 |
| Thermal cycles | 3 days | 2A | 2B | 2B | 2A | 2A | 2B |
| | 1 week | 2A | 2B | 2B | 2A | 2B | 2B |
| | 3 weeks | 2B | 3 | 3 | 2A | 2B | 3 |

| **Stability tests** | | **Example 8** | **Example 9** | **Example 10** | **Example 11** | **Example 12** |
|---|---|---|---|---|---|---|
| Absorbent paper test | | 1C | 1C | 1C | 1C | 1B |
| Sonication | | 3 | 2 | 2 | 2 | 1 |
| Thermal cycles | 3 days | 2A | 2A | 2A | 2A | 2A |
| | 1 week | 2B | 2B | 2B | 2A | 2A |
| | 3 weeks | 3 | 3 | 3 | 2B | 2A |

| **Stability tests** | | **Comparative example 3** | **Comparative example 4** | **Comparative example 5** | **Comparative example 6** | **Comparative example 7** |
|---|---|---|---|---|---|---|
| Absorbent paper test | | 1C | 1C | 1C | 1C | 3 |
| Sonication | | 3 | 3 | 3 | 3 | 2 |
| Thermal cycles | 3 days | 2B | 2B | 2B | 2B | 5 |
| | 1 week | 4 | 2B | 2B | 2B | - |
| | 3 weeks | --- | 4 | 4 | 4 | - |

As can be seen the emulsions of the invention showed greater stability than the emulsions of the comparative examples.

### REFERENCES CITED IN THE APPLICATION

WO 2013/064712

## Claims

1. An edible emulsion consisting of:
a) from 1.2 to 3.0 wt% of one or more thermogelling cellulose ethers,
b) from 40 to 50 wt% of one or more vegetable oils,
c) a pH adjusting agent in an amount such that the pH of the final emulsion is from 3.5 to 6.0,
d) from 0.02 to 0.5 wt% of an anionic naturally occurring polysaccharide of vegetal or microbiological origin selected from the group consisting of xanthan gum, gellan gum, bamboo fiber, citric fiber, green pea fiber, oat fiber, wheat fiber, and potato fiber,
e) from 45 to 60 wt% of water,
f) one or more additives selected from the group consisting of preservatives, antioxidants, colouring agents, aromas, and combinations thereof;
wherein the amount of trans fatty acids in the emulsion is lower than 0.1 wt%; and
wherein the percentages are expressed with respect to the total weight of the emulsion provided that the sum of the amounts of the components is equal to or less than 100%.

2. The edible emulsion according to claim 1, wherein the cellulose ethers are selected from the group consisting of methyl cellulose, hydroxypropylmethylcellulose, and a combination thereof.

3. The edible emulsion according to any of the claims 1-2, wherein the cellulose ether is methyl cellulose.

4. The edible emulsion according to any of the claims 1-3, wherein the vegetable oils are non-hydrogenated vegetable oils.

5. The edible emulsion according to any of the claims 1-4, wherein the vegetable oils are selected from the group consisting of olive oil, sunflower oil, corn oil, soybean oil, rapeseed oil, linseed oil, peanut oil, and a combination thereof.

6. The edible emulsion according to any of the claims 1-5, wherein the vegetable oil is sunflower oil.

7. The edible emulsion according to any of the claims 1-6, wherein the pH adjusting agent is citric acid.

8. The edible emulsion according to any of the claims 1-7, wherein the anionic naturally occurring polysaccharide of vegetal or microbiological origin is bamboo fiber.

9. The edible emulsion according to any of the claims 1-7, wherein the anionic naturally occurring polysaccharide of vegetal or microbiological origin is xanthan gum.

10. The edible emulsion according to any of the claims 1-9, wherein the additives are preservatives.

11. The edible emulsion according to claim 10, wherein the preservatives are sorbic acid and a sorbate selected from calcium sorbate, potassium sorbate and sodium sorbate.

12. The edible emulsion according to any of the claims 1-11, wherein the additives are selected from the group consisting of antioxidants, colouring agents, aromas, and combinations thereof.

13. A process for the preparation of the emulsion as defined in any of the claims 1-12, which comprises:
a) dispersing one or more cellulose ethers and optionally one or more additives in one or more vegetable oils to obtain an oily phase,
b) separately dissolving an anionic naturally occurring polysaccharide of vegetal or microbiological origin and one or more additives in water at a temperature from 20 to 80 °C to obtain an aqueous phase,
wherein the additives are added either to the oily phase a) or to the aqueous phase b) depending on their solubility,
c) cooling the aqueous phase obtained in step b) to room temperature,
d) adding a pH adjusting agent to the solution of step c),
e) cooling the aqueous phase obtained in step d) to a temperature from 1 to 15 °C, and
f) adding the aqueous phase of step e) to the oily phase of step a) to obtain an emulsion.

14. A foodstuff comprising an emulsion as defined in any of claims 1 to 12.

15. The foodstuff according to claim 14, which is an ice cream, a cream type filling, or a baked food.

## Patentansprüche

1. Eine essbare Emulsion bestehend aus:
a) von 1,2 bis 3,0 Gew.-% von einem oder mehreren thermogelbildenden Celluloseethern, und
b) von 40 bis 50 Gew.-% von einem oder mehreren pflanzlichen Ölen,
c) einem Mittel zur Einstellung des pH-Werts in einer Menge, bei der der pH-Wert der Endemulsion von 3,5 bis 6,0 reicht,
d) von 0,02 Gew.-% bis 0,5 Gew.-% von einem anionischen natürlich vorkommenden Polysaccharid pflanzlichen oder mikrobiologischen Ursprungs ausgewählt aus der Gruppe bestehend aus Xanthan, Gellan, Bambusfaser, Zitrusfaser, Faser aus grünen Erbsen, Haferfaser, Weizenfaser und Kartoffelfaser,
e) von 45 bis 60 Gew.-% Wasser,
f) einem oder mehreren Zusatzstoffen ausgewählt aus der Gruppe bestehend aus Konservierungsmitteln, Antioxidationsmitteln, Farbstoffen, Aromastoffen, und Kombinationen davon;
wobei die Menge an trans-Fettsäuren in der Emulsion geringer als 0,1 Gew.-% ist; und
wobei die Prozentanteile bezogen auf das gesamte Gewicht der Emulsion ausgedrückt sind, mit der Maßgabe, dass die Summe der Mengen der Bestandteile 100% oder weniger beträgt.

2. Die essbare Emulsion nach Anspruch 1, wobei die Celluloseether ausgewählt aus der Gruppe bestehend aus Methylcellulose, Hydroxypropylmethylcellulose und einer Kombination davon sind.

3. Die essbare Emulsion nach einem der Ansprüche 1-2, wobei das Celluloseether Methylcellulose ist.

4. Die essbare Emulsion nach einem der Ansprüche 1-3, wobei die pflanzlichen Öle nicht hydrogenierte pflanzliche Öle sind.

5. Die essbare Emulsion nach einem der Ansprüche 1-4, wobei die pflanzlichen Öle ausgewählt aus der Gruppe bestehend aus Olivenöl, Sonnenblumenöl, Maisöl, Sojaöl, Rapsöl, Leinsamenöl, Erdnussöl und einer Kombination davon sind.

6. Die essbare Emulsion nach einem der Ansprüche 1-5, wobei das pflanzliche Öl Sonnenblumenöl ist.

7. Die essbare Emulsion nach einem der Ansprüche 1-6, wobei das Mittel zur Einstellung des pH-Werts Citronensäure ist.

8. Die essbare Emulsion nach einem der Ansprüche 1-7, wobei das anionische natürlich vorkommende Polysaccharid pflanzlichen oder mikrobiologischen Ursprungs Bambusfaser ist.

9. Die essbare Emulsion nach einem der Ansprüche 1-7, wobei das anionische natürlich vorkommende Polysaccharid pflanzlichen oder mikrobiologischen Ursprungs Xanthan ist.

10. Die essbare Emulsion nach einem der Ansprüche 1-9, wobei die Zusatzstoffe Konservierungsmittel sind.

11. Die essbare Emulsion nach Anspruch 10, wobei die Konservierungsmittel Sorbinsäure und ein Sorbat ausgewählt aus Calciumsorbat, Kaliumsorbat und Natriumsorbat sind.

12. Die essbare Emulsion nach einem der Ansprüche 1-11, wobei die Zusatzstoffe ausgewählt aus der Gruppe bestehend aus Antioxidationsmitteln, Farbstoffen, Aromastoffen und Kombinationen davon sind.

13. Ein Verfahren zur Herstellung der Emulsion wie in einem der Ansprüche 1-12 definiert, welches folgendes umfasst:
a) das Dispergieren von einem oder mehreren Celluloseethern und wahlweise einem oder mehreren Zusatzstoffen in einem oder mehreren pflanzlichen Ölen, um eine ölige Phase zu erhalten,
b) das getrennte Lösen von einem anionischen natürlich vorkommenden Polysaccharid pflanzlichen oder mikrobiologischen Ursprungs und einem oder mehreren Zusatzstoffen in Wasser bei einer Temperatur von 20 bis 80 °C, um eine wässrige Phase zu erhalten,
wobei die Zusatzstoffe entweder der öligen Phase a) oder der wässrigen Phase b) in Abhängigkeit von deren Löslichkeit hinzugegeben werden,
c) das Abkühlen der im Schritt b) erhaltenen wässrigen Phase bei Raumtemperatur,
d) das Hinzufügen von einem Mittel zur Einstellung des pH-Werts der Lösung des Schritts c),
e) das Abkühlen der im Schritt d) erhaltenen wässrigen Phase auf eine Temperatur von 1 bis 15 °C, und
f) das Hinzufügen von der wässrigen Phase des Schritts e) der öligen Phase des Schritts a), um eine Emulsion zu erhalten.

14. Ein Nahrungsmittel umfassend eine Emulsion wie in einem der Ansprüche 1 bis 12 definiert.

15. Das Nahrungsmittel nach Anspruch 14, welches ein Speiseeis, eine cremeartige Füllung, oder ein gebackenes Lebensmittel ist.

## Revendications

1. Une émulsion comestible se composant de:
a) de 1,2 à 3,0 % en poids d'un ou de plusieurs éthers de cellulose thermogélifiants,
b) de 40 à 50 % en poids d'un ou de plusieurs huiles végétales,
c) un agent d'ajustement du pH dans une quantité telle que le pH de l'émulsion finale est de 3,5 à 6,0,
d) de 0,02 à 0,5 % en poids d'un polysaccharide naturel anionique d'origine végétale ou microbiologique choisi dans le groupe constitué de la gomme xanthane, la gomme gellane, fibre de bambou, fibre de citrique, fibre de pois verts, fibre d'avoine, fibre de blé, et fibre de pomme de terre,
e) de 45 à 60 % en poids d'eau,
f) un ou plusieurs additifs choisis dans le groupe constitué d'agents de conservation, agents antioxydants, agents colorants, arômes, et des combinaisons de ceux-ci;
où la quantité d'acides gras trans dans l'émulsion est inférieure à 0,1 % en poids; et
où les pourcentages sont exprimés par rapport au poids total de l'émulsion, pourvu que la somme des quantités des composants soit égale ou inférieure à 100 %.

2. L'émulsion comestible selon la revendication 1, dans laquelle les éthers de cellulose sont choisis dans le groupe constitué de la méthylcellulose, l'hydroxypropylméthylcellulose, et une combinaison de celles-ci.

3. L'émulsion comestible selon l'une quelconque des revendications 1-2, dans laquelle l'éther de cellulose est la méthylcellulose.

4. L'émulsion comestible selon l'une quelconque des revendications 1-3, dans laquelle les huiles végétales sont des huiles végétales non hydrogénées.

5. L'émulsion comestible selon l'une quelconque des revendications 1-4, dans laquelle les huiles végétales sont choisies dans le groupe constitué de l'huile d'olive, l'huile de tournesol, l'huile de maïs, l'huile de soja, l'huile de colza, l'huile de lin, l'huile d'arachide, et une combinaison de ceux-ci.

6. L'émulsion comestible selon l'une quelconque des revendications 1-5, dans laquelle l'huile végétale est l'huile de tournesol.

7. L'émulsion comestible selon l'une quelconque des revendications 1-6, dans laquelle l'agent d'ajustement du pH est l'acide citrique.

8. L'émulsion comestible selon l'une quelconque des revendications 1-7, dans laquelle le polysaccharide naturel anionique d'origine végétal ou microbiologique est une fibre de bambou.

9. L'émulsion comestible selon l'une quelconque des revendications 1-7, dans laquelle le polysaccharide naturel anionique d'origine végétal ou microbiologique est la gomme xanthane.

10. L'émulsion comestible selon l'une quelconque des revendications 1-9, dans laquelle les additifs sont des agents de conservation.

11. L'émulsion comestible selon la revendication 10, dans laquelle les agents de conservation sont l'acide sorbique et un sorbate choisi parmi le sorbate de calcium, le sorbate de potassium et le sorbate de sodium.

12. L'émulsion comestible selon l'une quelconque des revendications 1-11, dans laquelle les additifs sont choisis dans le groupe constitué des antioxydants, des agents colorants, des arômes et des combinaisons de ceux-ci.

13. Un procédé pour la préparation de l'émulsion telle que définie dans l'une quelconque des revendications 1-12, qui comprend:
a) disperser un ou plusieurs éthers de cellulose et, facultativement, un ou plusieurs additifs dans une ou plusieurs huiles végétales afin d'obtenir une phase huileuse,
b) dissoudre séparément un polysaccharide naturel anionique d'origine végétal ou microbiologique et un ou plusieurs additifs en eau à une température allant de 20 à 80 °C afin d'obtenir une phase aqueuse,
dans lequel les additifs sont ajoutés ou bien à la phase huileuse a) ou bien à la phase aqueuse b) en fonction de leur solubilité,
c) refroidir la phase aqueuse obtenue dans l'étape b) à température ambiante,
d) ajouter un agent d'ajustement du pH à la solution de l'étape c),
e) refroidir la phase aqueuse obtenue dans l'étape d) à une température de 1 à 15 °C, et
f) ajouter la phase aqueuse de l'étape e) à la phase huileuse de l'étape a) afin d'obtenir une émulsion.

14. Un produit alimentaire comprenant une émulsion telle que définie dans l'une quelconque des revendications 1 à 12.

15. Le produit alimentaire selon la revendication 14, qui est une crème glacée, un fourrage de type crème, ou un aliment cuit au four.
